# EUROPEAN PATENT APPLICATION

(11) **EP 4 786 330 A1**
(43) Date of publication of application: **05.08.2026**
(21) Application number: 26155124.6
(22) Date of filing: 29.01.2026
(51) Int. Cl.: B64C 11/06, B64C 11/32, B64C 29/00

(54) **BLADE PITCH ANGLE CHANGING MECHANISM**

(30) Priority: 03.02.2025 JP 2025016147
(71) Applicant: Honda Motor Co., Ltd., Toyko 105-8404 (JP)
(72) Inventor: SANO, Soichiro, Saitama, 351-0193 (JP)
(74) Representative: Weickmann & Weickmann PartmbB

(57) **Abstract**

A blade pitch angle changing mechanism (30) includes a control rod (56) movable in an axial direction of a rotating body (41) that rotates a propeller (24) provided in a flying object (10), and a crosshead (58) that can change a pitch angle of a blade (34) provided in the propeller (24) by moving in the axial direction in accordance with movement of the control rod (56). A pitch angle invariable section in which the pitch angle is not changed is set in a part of a movable range of the control rod (56).

## Description

### BACKGROUND OF THE INVENTION

### FIELD OF THE INVENTION

The present disclosure relates to a blade pitch angle changing mechanism.

### DESCRIPTION OF THE RELATED ART

US 11420762 B2 discloses a propeller device capable of changing the pitch angle of a plurality of blades. Specifically, the propeller device includes a control rod that is linearly moved by an actuator, and a crosshead provided at one end of the control rod. The pitch angle of the plurality of blades is changed in conjunction with the movement of the control rod.

### SUMMARY OF THE INVENTION

In the conventional technique, the blade pitch angle is changed in conjunction with the movement of the control rod over the entire movable range of the control rod. However, when the function of the propeller device is expanded, if the blade pitch angle is changed in conjunction with the movement of the control rod over the entire movable range of the control rod, a situation may occur in which the pitch angle changing function cannot be sufficiently exhibited due to the restraining factor.

The present disclosure has the object of solving the above-described problem.

An aspect of the present disclosure is characterized by a blade pitch angle changing mechanism comprising: a control rod movable in an axial direction of a rotating body configured to rotate a propeller provided in a flying object; and a crosshead configured to change a pitch angle of a blade provided in the propeller by moving in the axial direction in accordance with movement of the control rod, wherein a pitch angle invariant section in which the pitch angle is not changed is set in a part of a movable range of the control rod.

According to the blade pitch angle changing mechanism of the present disclosure, the pitch angle invariant section and the other section (the pitch angle changing section) are set in the movable range of the control rod. Therefore, the pitch angle changing function can be sufficiently exhibited by rotating the propeller in the pitch angle changing section.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is an external perspective view of a flying object;
FIG. 2 is a first cross-sectional view of a VTOL rotor;
FIG. 3 is a second cross-sectional view of the VTOL rotor;
FIG. 4 is a third cross-sectional view of the VTOL rotor;
FIG. 5 is a perspective view of a head pressing portion, a rotational stopper, and a fixed stopper;
FIG. 6 is a diagram showing a relationship between a moving distance of a control rod and a pitch angle;
FIG. 7A is a first diagram illustrating the operation of a propeller rotation locking unit;
FIG. 7B is a second diagram illustrating the operation of the propeller rotation locking unit;
FIG. 7C is a third diagram illustrating the operation of the propeller rotation locking unit;
FIG. 7D is a fourth diagram illustrating the operation of the propeller rotation locking unit;
FIG. 7E is a fifth diagram illustrating the operation of the propeller rotation locking unit; and
FIG. 7F is a sixth diagram illustrating the operation of the propeller rotation locking unit.

### DETAILED DESCRIPTION OF THE INVENTION

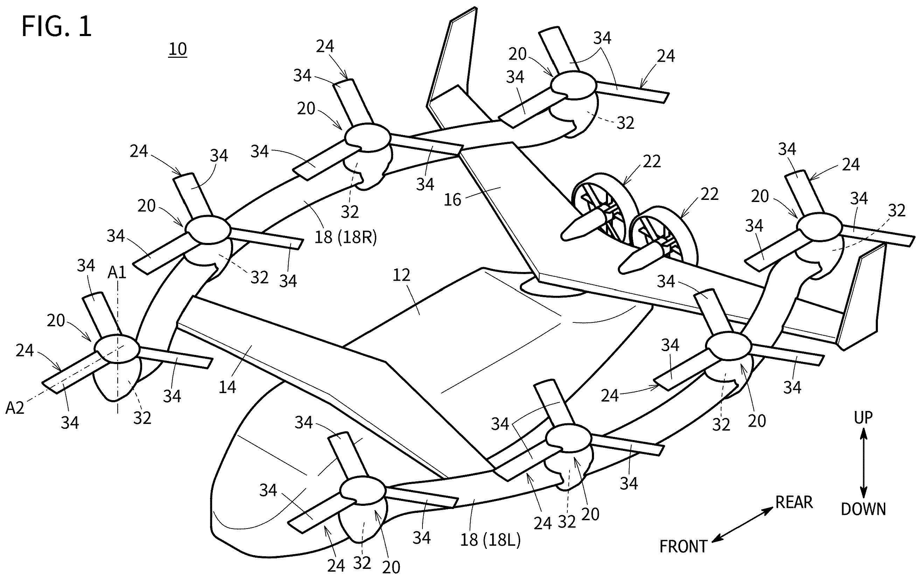

A flying object 10 shown in FIG. 1 is a vertical take-off and landing aircraft (VTOL aircraft). Although the flying object 10 shown in FIG. 1 is a passenger aircraft, the flying object 10 may be an unmanned aerial vehicle such as a drone. In the present disclosure, a direction in which the flying object 10 flies when cruising is defined as "forward", and a direction opposite to "forward" is defined as "rearward".

The flying object 10 is, for example, an electric vertical take-off and landing aircraft (so-called eVTOL aircraft). The flying object 10 includes a fuselage 12, a front wing 14, a rear wing 16, two booms 18, eight VTOL rotors 20, and two cruise rotors 22.

The front wing 14 is connected to a front portion of the fuselage 12. The rear wing 16 is connected to a rear portion of the fuselage 12. The front wing 14 and the rear wing 16 generate lift as the flying object 10 moves forward.

The two booms 18 extend in the front-rear direction. One of the two booms 18 is a right boom 18R disposed on the right side of the fuselage 12. The other of the two booms 18 is a left boom 18L disposed on the left side of the fuselage 12.

Four VTOL rotors 20 are arranged on the right boom 18R sequentially toward the rear. Similarly, four VTOL rotors 20 are arranged on the left boom 18L sequentially toward the rear. Each VTOL rotor 20 is a propeller device that generates thrust (lift) in a vertically upward direction. Each VTOL rotor 20 is used in a takeoff phase, a vertical climb phase, a transition phase from the climb phase to cruise, a transition phase from the cruise to a descent phase, a vertical descent phase, a landing phase, and a hovering phase.

Two cruise rotors 22 are arranged on the rear wing 16 so as to be arranged side by side in the left-right direction. Each cruise rotor 22 is used in a cruise phase, a transition phase from the climb phase to the cruise, and a transition phase from the cruise to the descent phase. Each cruise rotor 22 is a thrust generating device that causes air to flow from the front to the rear, and generates thrust for causing the flying object 10 to fly in a substantially horizontal direction.

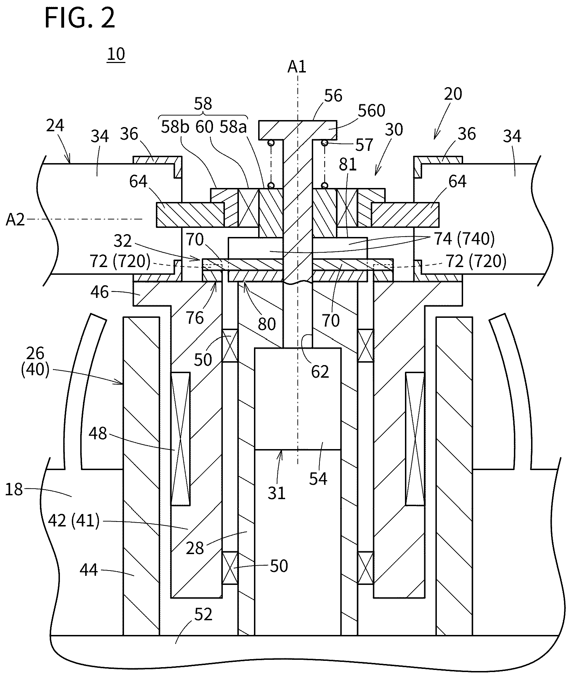

As shown in FIG. 2, each VTOL rotor 20 includes a propeller 24, a rotational driving force applying unit 26, a central support member 28, and a blade pitch angle changing mechanism 30. Hereinafter, the rotational central axis of the propeller 24 is referred to as a "rotational axis A1". The blade pitch angle changing mechanism 30 is abbreviated as a "pitch angle changing mechanism 30". Concerning the VTOL rotors 20 and the components thereof, a direction lying along the rotational axis A1 is referred to as an "axial direction", a direction around the rotational axis A1 is referred to as a "circumferential direction", and a direction perpendicular to the rotational axis A1 is referred to as a "radial direction".

The propeller 24 includes a plurality of blades 34. As shown in FIG. 1, the plurality of blades 34 are arranged at equal intervals in the circumferential direction. In the present embodiment, the number of the blades 34 included in each propeller 24 is three, but in another aspect, the number of the blades 34 included in each propeller 24 may be two, or four or more.

Base end portions, which are the inner end portions of the plurality of blades 34, are respectively inserted into a plurality of blade support portions 36. Each blade 34 is supported by each blade support portion 36 so as to be rotatable about a blade axis A2 orthogonal to the rotational axis A1. The blade 34 can pivot within a predetermined movable range by rotating about the blade axis A2. Therefore, it is possible to change the pitch angle of each blade 34 of the propeller 24. In the propeller 24, the minimum value of the pitch angle of each blade 34 is, for example, approximately 0 degrees, and the maximum value of the pitch angle is, for example, 15 degrees to 30 degrees. The pitch angle of the blade 34 is changed based on the operation of the pitch angle changing mechanism 30.

The rotational driving force applying unit 26 is a rotational driving source for rotating the propeller 24. In the present embodiment, the rotational driving force applying unit 26 is a motor 40 that operates with electric power. The motor 40 includes a rotor 42 and a stator 44. The rotor 42 is a portion of the motor 40 that rotates about the rotational axis A1 relative to the airframe (the boom 18) of the flying object 10. That is, the rotor 42 is a rotating body 41 that rotates the propeller 24.

A mount portion 46 on which the blades 34 are placed is provided on an upper portion of the rotor 42. The blade support portions 36 are fixed to an upper surface of the mount portion 46. The rotor 42 includes a plurality of permanent magnets 48. The rotor 42 is rotatably supported by the central support member 28 via a plurality of bearings 50. Note that the rotor 42 may be rotatably supported by the stator 44 via bearings. The rotational driving force applying unit 26 is not limited to being the motor 40, and may be, for example, an internal combustion engine.

The stator 44 is disposed so as to surround the rotor 42. Although not shown in detail, the stator 44 includes an electromagnetic coil. The motor 40 is a so-called inner rotor motor in which the rotor 42 is disposed inside the stator 44. The motor 40 may be a so-called outer rotor motor in which the rotor 42 is disposed outside the stator 44.

The central support member 28 is supported by (fixed to) the airframe (the boom 18) of the flying object 10. The central support member 28 protrudes upward from a support base 52 along the rotational axis A1, and is disposed inside the motor 40. The central support member 28 is a hollow member.

The pitch angle changing mechanism 30 is capable of changing the pitch angle of each blade 34 by rotating the blade 34 about the blade axis A2. The pitch angle changing mechanism 30 includes a pitch angle changing unit 31 and a propeller rotation locking unit 32.

The pitch angle changing unit 31 includes an actuator 54, a control rod 56, a crosshead 58, at least one head pressing portion 70, a head support portion 80, and a plurality of actuating pins 64. The actuator 54 moves the control rod 56 linearly up and down along the rotational axis A1. The actuator 54 may be, for example, an electric actuator such as a linear motor. The actuator 54 may be a cylinder device (a fluid pressure actuator). The actuator 54 is disposed inside the central support member 28. The actuator 54 may be disposed outside the central support member 28.

The control rod 56 constitutes a part of a motive power transmission path for transmitting the driving force of the actuator 54 to the blades 34. The control rod 56 is movable up and down along the rotational axis A1. The control rod 56 is inserted through an insertion hole 62 formed in an upper portion of the central support member 28. When moving in the axial direction, the control rod 56 is guided by the inner surface that forms the insertion hole 62. A lower end of the control rod 56 is supported by (connected to) the actuator 54. The control rod 56 penetrates through the insertion hole 62 of the central support member 28 and protrudes upward from an upper surface of the central support member 28. The control rod 56 is a non-rotating member.

The crosshead 58 constitutes a part of the motive power transmission path for transmitting the driving force of the actuator 54 to the blades 34. The crosshead 58 is supported by the control rod 56 above the central support member 28. The crosshead 58 includes an inner head 58a, an outer head 58b, and a bearing 60. The inner head 58a is located above the central support member 28.

The inner head 58a is an annular member. The control rod 56 is inserted through the inner head 58a. The inner head 58a is not movable relative to the control rod 56 in the circumferential direction. That is, the inner head 58a is a member (a non-rotating portion) that does not rotate. The inner head 58a is movable relative to the control rod 56 in the axial direction. Therefore, the crosshead 58 is movable relative to the control rod 56 in the axial direction. A biasing member 57 is disposed between the inner head 58a and the control rod 56. Specifically, the biasing member 57 is disposed between a flange portion 560 provided at an upper end portion of the control rod 56 and an upper surface of the inner head 58a. The biasing member 57 is an elastic body that biases the inner head 58a downward. The biasing member 57 is, for example, a coil spring.

The outer head 58b is an annular member located radially outward of the inner head 58a. The bearing 60 is disposed between the inner head 58a and the outer head 58b. Therefore, the outer head 58b is rotatable relative to the control rod 56 and the inner head 58a in the circumferential direction.

The head pressing portion 70 moves in the axial direction integrally with the control rod 56 and is capable of pressing the crosshead 58 in the axial direction (upward). The head pressing portion 70 moves the crosshead 58 (the inner head 58a) in the axial direction, thereby changing the pitch angle of each blade 34. The head pressing portion 70 is fixed to the control rod 56. The head pressing portion 70 is not movable relative to the control rod 56 in the circumferential direction and the axial direction. Therefore, the head pressing portion 70 moves in the axial direction integrally with the control rod 56, but is movable relative to the crosshead 58 in the axial direction. The head pressing portion 70 is a non-rotating portion. In the present embodiment, a plurality of the head pressing portions 70 are provided at intervals in the circumferential direction. The plurality of head pressing portions 70 are arranged radially around the control rod 56.

The head support portion 80 is an annular member and is fixed to the upper surface of the central support member 28, which is a non-rotating portion. Therefore, the head support portion 80 is a non-rotating portion. The head support portion 80 may have an annular shape, but may have a polygonal annular shape. The head support portion 80 is disposed below the inner head 58a. The head support portion 80 is disposed concentrically with the central support member 28. The head support portion 80 has a restriction surface 81, which is an upper surface thereof capable of supporting the inner head 58a. The inner head 58a is always biased toward the head support portion 80 by the biasing force of the biasing member 57. In FIG. 2, the inner head 58a is seated on the restriction surface 81 of the head support portion 80. The position of the inner head 58a shown in FIG. 2 is the lower end of the movable range of the inner head 58a.

The actuating pins 64 each constitute a part of the motive power transmission path for transmitting the driving force of the actuator 54 to the blades 34. The actuating pins 64 protrude radially outward from the outer head 58b. The actuating pins 64 are fixed to the outer head 58b. The actuating pins 64 and the outer head 58b may be an integrally formed member. The actuating pins 64 are members that rotate integrally with the propeller 24 about the rotational axis Al.

As the crosshead 58 moves in the axial direction, the actuating pins 64 move in the axial direction (move up and down) integrally with the crosshead 58 and also rotate about the blade axis A2. The plurality of actuating pins 64 are provided at intervals in the circumferential direction, correspondingly to the plurality of blades 34. As the actuating pins 64 move in the axial direction integrally with the crosshead 58, the blades 34 pivot about the blade axis A2. Each actuating pin 64 is engaged with, for example, a lever protruding from the base end portion of each blade 34, and pivots each blade 34 via the lever.

In the present embodiment, the propeller rotation locking unit 32 includes at least one rotational stopper 72 and at least one fixed stopper 74. In the present embodiment, a plurality of the rotational stoppers 72 and a plurality of the fixed stoppers 74 are provided. The number of the fixed stoppers 74 is the same as the number of the head pressing portions 70. The number of the rotational stoppers 72 may be larger than the number of the head pressing portions 70. In this case, the number of the rotational stoppers 72 is an integral multiple of the number of the head pressing portions 70.

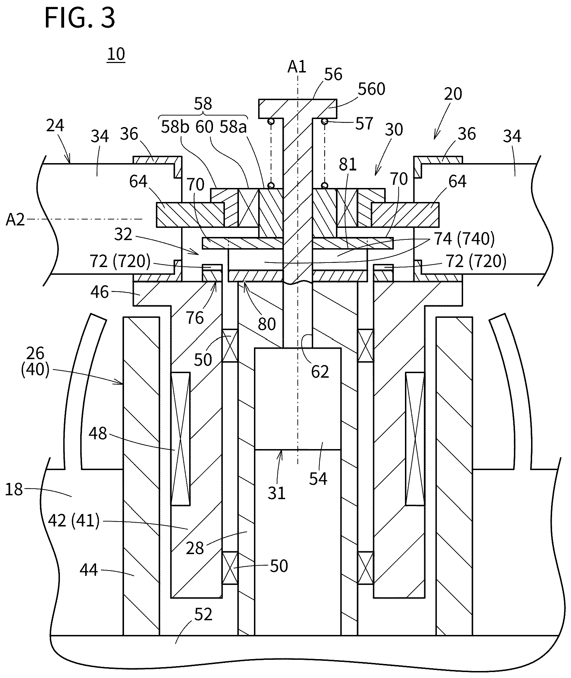

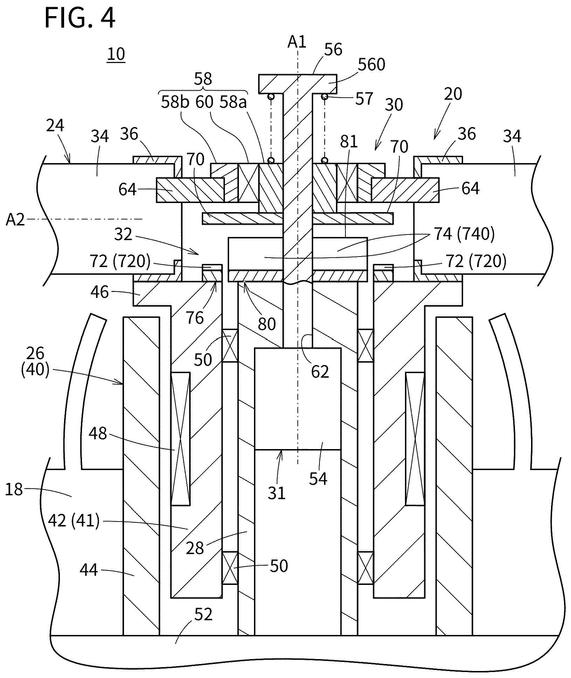

In accordance with the movement of the control rod 56 in the axial direction, each head pressing portion 70 can move to a position (FIG. 2) where the head pressing portion 70 engages with the rotational stopper 72 and the fixed stopper 74 and is not in contact with the inner head 58a, a position (FIG. 3) where the head pressing portion 70 does not engage with the rotational stopper 72, and a position (FIG. 4) where the head pressing portion 70 abuts against the inner head 58a and raises the inner head 58a. When the head pressing portion 70 is raised, after the head pressing portion 70 abuts against the inner head 58a, the pitch angle of each blade 34 increases as the separation distance in the axial direction between the head pressing portion 70 and the rotational stopper 72 increases.

It should be noted that the number of the head pressing portions 70 may be the same as or different from the number of the blades 34 provided in one propeller 24.

The plurality of rotational stoppers 72 are arranged at equal intervals in the circumferential direction. In the present embodiment, the plurality of rotational stoppers 72 are a plurality of first stopper grooves 720 provided in a stopper member 76. The stopper member 76 is an annular member and is fixed to the upper portion of the rotating body 41 (the rotor 42). Therefore, the stopper member 76 rotates integrally with the rotating body 41. That is, the stopper member 76 is a stopper member on the rotating side. The stopper member 76 is a first stopper member. The stopper member 76 is disposed radially outward of the head support portion 80. The central axis of the stopper member 76 coincides with the rotational axis A1.

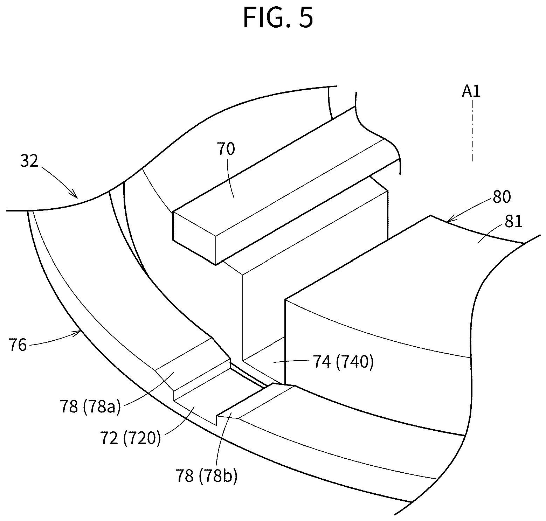

The stopper member 76 may have an annular shape, but may have a polygonal annular shape. The stopper member 76 is disposed concentrically with the rotating body 41. The first stopper grooves 720 are recessed downward from an upper surface of the stopper member 76. As shown in FIG. 5, when the phase of the first stopper grooves 720 matches the phase of the head pressing portions 70 in the circumferential direction, the first stopper grooves 720 can receive the head pressing portions 70, respectively.

As shown in FIG. 5, inclined surfaces 78a and 78b that are inclined downward toward the first stopper groove 720 are provided on both sides of the first stopper groove 720 in the circumferential direction. The upper surface of the stopper member 76 is a plane perpendicular to the rotational axis A1. The inclination angle of each inclined surface 78 with respect to the plane perpendicular to the rotational axis A1 is, for example, 5 degrees to 30 degrees. Note that, among the inclined surfaces 78a and 78b, only the inclined surface 78a on the front side in the rotational direction may be provided. The inclined surfaces 78a and 78b are not essential and may not be provided.

The plurality of fixed stoppers 74 are arranged at equal intervals in the circumferential direction. In the present embodiment, the plurality of fixed stoppers 74 are a plurality of second stopper grooves 740 provided in the head support portion 80. Therefore, in the present embodiment, the head support portion 80 is a second stopper member.

The second stopper grooves 740 are recessed downward from an upper surface of the head support portion 80. As shown in FIG. 5, the phase of the head pressing portions 70 and the phase of the fixed stoppers 74 are the same in the circumferential direction. The second stopper grooves 740 can receive the head pressing portions 70, respectively. The depth of each second stopper groove 740 in the axial direction is larger than the thickness of each head pressing portion 70 in the axial direction. Therefore, as shown in FIG. 2, in a state where the head pressing portions 70 are inserted to the deepest portions of the second stopper grooves 740, respectively, the head pressing portions 70 and the inner head 58a are separated from each other in the axial direction.

It should be noted that the second stopper member including the second stopper grooves 740 may be a member different from the head support portion 80. That is, the member including the second stopper grooves 740 and the member capable of supporting the inner head 58a may be separate members.

In the present embodiment, the rotational stoppers 72 are formed in a groove shape, and the head pressing portions 70 are inserted into the grooves, but the present disclosure is not limited to such a configuration. In another aspect, a stopper protrusion may be provided on each rotational stopper 72, and a stopper groove may be provided in each head pressing portion 70.

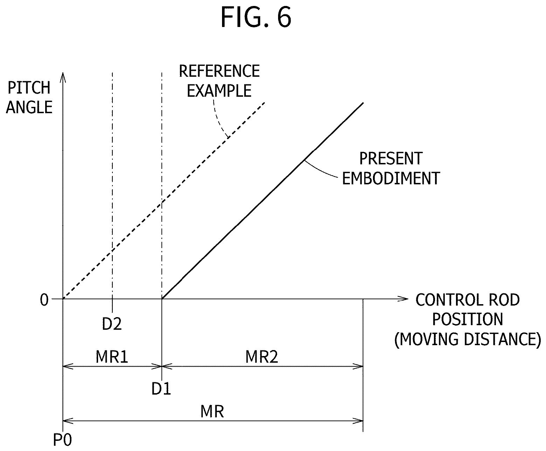

As shown in FIG. 6, in the present embodiment, a pitch angle invariant section MR1 is set in a part of a movable range MR of the control rod 56. That is, the movable range MR of the control rod 56 includes the pitch angle invariant section MR1 in which the pitch angle is not changed in accordance with the movement of the control rod 56, and a pitch angle changing section MR2 in which the pitch angle is changed in accordance with the movement of the control rod 56.

One end of the movable range MR of the control rod 56 is a starting position PO at which the moving distance of the control rod 56 is zero, and is a lower end of the movable range MR of the control rod 56. The other end of the movable range MR of the control rod 56 is a maximum displacement position at which the moving distance of the control rod 56 is maximum, and is an upper end of the movable range MR of the control rod 56. When the moving distance of the control rod 56 from the starting position PO is less than a first threshold distance D1, the head support portion 80 supports the crosshead 58 so that the head pressing portions 70 are separated from the crosshead 58 (see FIG. 2).

In the case where the moving distance of the control rod 56 from the starting position PO is less than a second threshold distance D2, which is smaller than the first threshold distance D1, the head pressing portions 70 engage with the rotational stoppers 72, thereby preventing the propeller 24 from rotating (see FIG. 2). The pitch angle invariant section MR1 is a region of the movable range MR of the control rod 56 where the moving distance is less than the first threshold distance D1.

On the other hand, in a reference example (a conventional configuration), the entire region of the movable range of the control rod is a pitch angle changing section, and a pitch angle invariant section is not set.

The pitch angle changing mechanism 30 according to the present embodiment operates as follows.

The operation of the pitch angle changing mechanism 30 from the state shown in FIG. 2 will be described. In FIG. 2, the control rod 56 is at the starting position PO of the movable range MR (FIG. 6), and the head pressing portions 70 are engaged with the rotational stoppers 72 and the fixed stoppers 74. Further, the head pressing portions 70 are separated from the inner head 58a in the axial direction, and the inner head 58a is in contact with the restriction surface 81 of the head support portion 80. The pitch angle of the blades 34 is minimum (approximately 0 degrees).

When the control rod 56 is raised from the state shown in FIG. 2, the head pressing portions 70 fixed to the control rod 56 are raised integrally with the control rod 56. As a result, as shown in FIG. 3, the head pressing portions 70 are disengaged from the rotational stoppers 72, are raised inside the fixed stoppers 74, and abut against the inner head 58a. The first threshold distance D1 (FIG. 6) is the moving distance of the control rod 56 by which the head pressing portions 70 are raised and abut against the inner head 58a. Therefore, a section from when the head pressing portions 70 start to rise to when the head pressing portions 70 abut against the inner head 58a is the pitch angle invariant section MR1. In the pitch angle invariant section MR1, even when the control rod 56 moves in the axial direction, the inner head 58a does not move in the axial direction, and therefore, the pitch angle is not changed and is maintained at a minimum value.

On the other hand, the second threshold distance D2 (FIG. 6) is the moving distance of the control rod 56 that brings a state where the head pressing portions 70 are completely disengaged from the rotational stoppers 72 and are not in contact with the inner head 58a. In a state where the head pressing portions 70 are disengaged from the rotational stoppers 72, the rotor 42 can rotate, and the propeller 24 can therefore rotate.

When the control rod 56 is further raised from the state shown in FIG. 3, the control rod 56 raises the crosshead 58 including the inner head 58a as shown in FIG. 4. As a result, since the crosshead 58 raises the actuating pins 64, the blades 34 rotate about the blade axis A2 and the pitch angle is changed. In the pitch angle changing section MR2 (FIG. 6), the pitch angle is changed in conjunction with the movement of the control rod 56 in the axial direction. Therefore, when the control rod 56 is raised in the pitch angle changing section MR2, the pitch angle increases, and when the control rod 56 is lowered in the pitch angle changing section MR2, the pitch angle decreases.

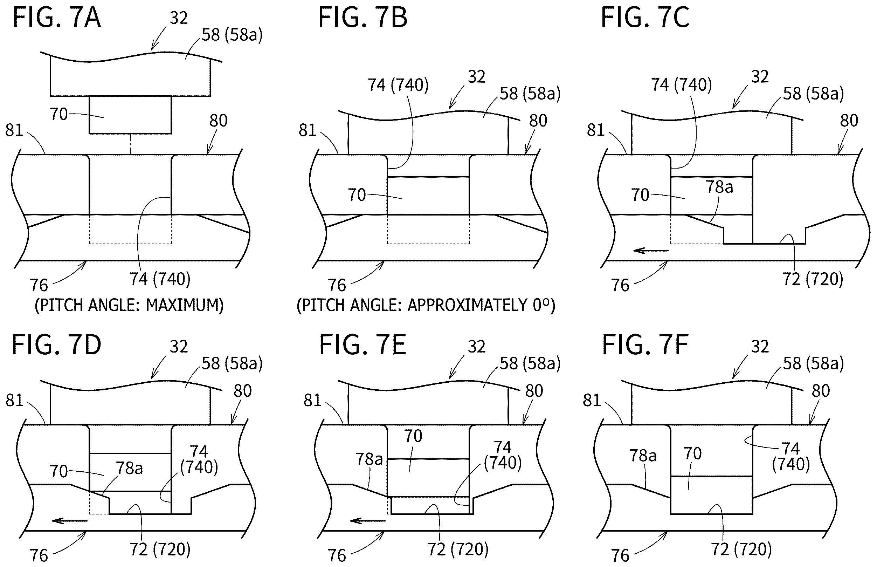

Next, the operation of the propeller rotation locking unit 32 will be described. Note that, although FIG. 7A to FIG. 7F are mainly referred to in the following description, FIG. 1 to FIG. 6 are also referred to as appropriate.

In FIG. 7A, the crosshead 58 is in the raised position, and each head pressing portion 70 is separated from the stopper member 76 and the head support portion 80 in the axial direction. At this time, the pitch angle of each blade 34 (FIG. 2) is maximum, for example. In the state shown in FIG. 7A, the head pressing portion 70 is not engaged with the rotational stopper 72, and the rotor 42 (FIG. 2 and the like) is in a rotatable state.

As shown in FIG. 7B, when the control rod 56 (FIG. 2) is lowered by the driving of the actuator 54 and the head pressing portion 70 is thereby lowered while the propeller 24 is rotated at a low speed, the inner head 58a abuts against the restriction surface 81 of the head support portion 80. As a result, lowering of the inner head 58a is stopped. At this time point, the pitch angle of each blade 34 (FIG. 2) is minimum (approximately 0 degrees, for example). On the other hand, even after the lowering of the inner head 58a is stopped, the head pressing portion 70 is lowered. Then, when the head pressing portion 70 is further lowered, the head pressing portion 70 abuts against the upper surface of the stopper member 76. Accordingly, the stopper member 76 rotates while sliding with respect to the head pressing portion 70.

As shown in FIG. 7C, the head pressing portion 70 approaches the rotational stopper 72 and the inclined surface 78a as the stopper member 76 rotates, but the head pressing portion 70 is still in contact with the upper surface of the stopper member 76, and therefore, the head pressing portion 70 is not lowered any more. As shown in FIG. 7D, when the stopper member 76 further rotates, the head pressing portion 70 is lowered while being guided by the inclined surface 78a, and approaches the rotational stopper 72 (the first stopper groove 720). At this time, the head pressing portion 70 starts to enter the fixed stopper 74 (the second stopper groove 740).

As shown in FIG. 7E, the head pressing portion 70 is guided by the inclined surface 78a until the stopper member 76 further rotates and lower end corner portions of the head pressing portion 70 reach upper end corner portions of the rotational stopper 72.

Then, as shown in FIG. 7F, when the phase of the head pressing portions 70 and the phase of the rotational stoppers 72 in the circumferential direction coincide with each other, the head pressing portion 70 is further lowered and enters the rotational stopper 72 (the first stopper groove 720). As a result, the head pressing portion 70 is brought into a state of being engaged with the rotational stopper 72 (a fully engaged state). In the fully engaged state, the head pressing portion 70 is also engaged with the fixed stopper 74. In this manner, by the head pressing portion 70 being engaged with the rotational stopper 72 and the fixed stopper 74, the rotor 42 is prevented from rotating. It should be noted that the fixed stoppers 74 are not essential and may not be provided.

As shown in FIG. 1, in a state where the rotation of each propeller 24 is prevented by the propeller rotation locking unit 32, the propeller 24 is fixed at a position within a range of plus 5 degrees to minus 5 degrees from a rotational position at which the resistance to the flight wind from ahead of the flying object 10 is minimized. Specifically, the propeller 24 is fixed so that one of the plurality of blades 34 (one of the blade axes A2) is located at a position that is within a range of plus 5 degrees to minus 5 degrees from a rotational position parallel to the front-rear direction of the airframe of the flying object 10 (the airframe axis direction) and that is on the front side of the airframe with respect to the rotational axis A1.

On the other hand, in the case where the number of the blades 34 provided in each propeller 24 is an even number, the number of the blades 34 fixed at the rotational position substantially parallel to the front-rear direction of the airframe of the flying object 10 is two for each propeller 24.

The present embodiment has the following effects.

As shown in FIG. 6, according to the pitch angle changing mechanism 30, the pitch angle invariant section MR1 in which the pitch angle is not changed is set in a part of the movable range MR of the control rod 56. According to such a configuration, the pitch angle invariant section MR1 and the other section (the pitch angle changing section MR2) are set in the movable range MR of the control rod 56. Therefore, the pitch angle changing function can be sufficiently exhibited by rotating the propeller 24 in the pitch angle changing section MR2.

As shown in FIG. 2, the crosshead 58 is movable relative to the control rod 56 in the axial direction, and the pitch angle is changed by the head pressing portions 70 moving the crosshead 58 in the axial direction. According to such a configuration, in the pitch angle invariant section MR1 (FIG. 6), even when the control rod 56 moves in the axial direction, the crosshead 58 does not move in the axial direction, and therefore, the pitch angle can be made invariant.

The pitch angle changing mechanism 30 includes the head support portion 80 that supports the crosshead 58 so that the head pressing portions 70 are separated from the crosshead 58 when the moving distance of the control rod 56 from the starting position P0 is less than the first threshold distance D1. According to such a configuration, since the head pressing portions 70 do not contact the crosshead 58 when the moving distance of the control rod 56 is less than the first threshold distance, the pitch angle invariant section MR1 can be easily secured.

The pitch angle changing mechanism 30 includes the biasing member 57 that biases the crosshead 58 toward the head support portion 80. According to such a configuration, the movement of the crosshead 58 can be prevented in the case where the head pressing portions 70 are separated from the crosshead 58.

The biasing member 57 is disposed between the control rod 56 and the crosshead 58. According to such a configuration, the biasing member 57 can be disposed with a simple structure.

In the case where the moving distance of the control rod 56 from the starting position P0 is less than the second threshold distance D2, which is smaller than the first threshold distance D1, the head pressing portions 70 engage with the rotational stoppers 72, thereby preventing the propeller 24 from rotating. The pitch angle invariant section MR1 is a region of the movable range MR of the control rod 56 where the moving distance is less than the first threshold distance D1. According to such a configuration, since the movement of the control rod 56 is used not only for changing the pitch angle of each blade 34 but also for preventing the rotation of the propeller 24, it is not necessary to add a dedicated actuator for locking the rotation of the propeller 24. Therefore, the weight can be reduced as compared to a configuration in which a dedicated actuator for locking the rotation of the propeller 24 is added.

Further, the pitch angle is not changed when the moving distance is less than the second threshold distance D2 over which the rotation of the propeller 24 is prevented, and the pitch angle is changed when the moving distance is equal to or greater than the first threshold distance D1, and therefore, the propeller 24 can be rotated in a region in which the pitch angle is small. On the other hand, in a configuration in which the pitch angle invariant section is not provided as in the reference example shown in FIG. 6, the pitch angle is changed over the entire movable range of the control rod. Therefore, if a mechanism that prevents the rotation of the propeller is provided in the configuration of the reference example, the propeller cannot be rotated in a region in which the pitch angle is small.

In the pitch angle changing mechanism 30, the pitch angle increases as the separation distance in the axial direction between the head pressing portions 70 and the rotational stoppers 72 increases in a state where the head pressing portions 70 are in contact with the crosshead 58. According to such a configuration, the pitch angle of the blades 34 can be reduced in a state where the head pressing portions 70 and the rotational stoppers 72 are engaged with each other and the rotation of the rotor 42 is prevented. This reduces the flight resistance when the rotation of the propeller 24 is stopped.

The pitch angle is approximately 0 degrees in a state where the head pressing portions 70 are engaged with the rotational stoppers 72, and the pitch angle is set such that the blades 34 lie along the plane of rotation of the propeller 24. According to such a configuration, the flight resistance when the rotation of the propeller 24 is stopped can be effectively reduced.

As shown in FIG. 2, when the head pressing portions 70 move in accordance with the movement of the control rod 56, the head pressing portions 70 engage with the rotational stoppers 72 and the fixed stoppers 74. According to such a configuration, it is possible to prevent the rotational torque from the rotational stoppers 72 from being transmitted to the control rod 56.

By engagement with the rotational stoppers 72, the propeller 24 is fixed at a position within a range of plus 5 degrees to minus 5 degrees from a rotational position at which the resistance to the flight wind from ahead of the flying object 10 is minimized. According to such a configuration, the flight resistance during cruise flight can be reduced.

By engagement with the rotational stoppers 72, the propeller 24 is fixed so that one of the plurality of blades 34 is located at a position that is within a range of plus 5 degrees to minus 5 degrees from a rotational position parallel to the front-rear direction of the airframe of the flying object 10 and that is on the front side of the airframe with respect to the rotational axis A1 (see FIG. 1). According to such a configuration, the flight resistance during cruise flight can be effectively reduced.

The following supplementary notes are further disclosed in relation to the above-described embodiment.

### Supplementary Note 1

The blade pitch angle changing mechanism (30) of the present disclosure includes: the control rod (56) movable in the axial direction of the rotating body (41) configured to rotate the propeller (24) provided in the flying object (10); and the crosshead (58) configured to change the pitch angle of the blade (34) provided in the propeller by moving in the axial direction in accordance with movement of the control rod, wherein the pitch angle invariant section (MR1) in which the pitch angle is not changed is set in a part of the movable range (MR) of the control rod. According to such a configuration, the pitch angle invariant section and the other section (the pitch angle changing section) are set in the movable range of the control rod. Therefore, the pitch angle changing function can be sufficiently exhibited by rotating the propeller in the pitch angle changing section.

### Supplementary Note 2

The blade pitch angle changing mechanism according to Supplementary Note 1 may further include the head pressing portion (70) configured to move integrally with the control rod in the axial direction and to press the crosshead, wherein the crosshead may be movable relative to the control rod in the axial direction, and the head pressing portion may move the crosshead in the axial direction to thereby change the pitch angle. According to such a configuration, in the pitch angle invariant section, even when the control rod moves in the axial direction, the crosshead does not move in the axial direction, and therefore, the pitch angle can be made invariant.

### Supplementary Note 3

In the blade pitch angle changing mechanism according to Supplementary Note 2, one end of the movable range of the control rod may be the starting position (PO) at which the moving distance of the control rod is zero, the other end of the movable range of the control rod may be the maximum displacement position at which the moving distance of the control rod is maximum, and the blade pitch angle changing mechanism may further include the head support portion (80) configured to support the crosshead in a manner so that the head pressing portion is separated from the crosshead when the moving distance of the control rod from the starting position is less than the first threshold distance. According to such a configuration, since the head pressing portion does not contact the crosshead when the movement distance of the control rod is less than the first threshold distance, the pitch angle invariant section can be easily secured.

### Supplementary Note 4

The blade pitch angle changing mechanism according to Supplementary Note 3 may further include the biasing member (57) configured to bias the crosshead toward the head support portion. According to such a configuration, the movement of the crosshead can be prevented in the case where the head pressing portion is separated from the crosshead.

### Supplementary Note 5

In the blade pitch angle changing mechanism according to Supplementary Note 4, the biasing member may be disposed between the control rod and the crosshead. According to such a configuration, the biasing member can be disposed with a simple structure.

### Supplementary Note 6

In the blade pitch angle changing mechanism according to Supplementary Note 3, the rotating body may be provided with the rotational stopper (72) engageable with the head pressing portion, in the case where the moving distance of the control rod from the starting position is less than the second threshold distance that is smaller than the first threshold distance, the head pressing portion may engage with the rotational stopper to thereby prevent the propeller from rotating, and the pitch angle invariant section may be a region of the movable range of the control rod where the moving distance is less than the first threshold distance. According to such a configuration, since the movement of the control rod is used not only for changing the pitch angle of the blade but also for preventing the rotation of the propeller, it is not necessary to add a dedicated actuator for locking the rotation of the propeller. Therefore, the weight can be reduced as compared to a configuration in which a dedicated actuator for locking the rotation of the propeller is added. Further, the pitch angle is not changed when the moving distance is less than the second threshold distance over which the rotation of the propeller is prevented, and the pitch angle is changed when the moving distance is equal to or greater than the first threshold distance, and therefore, the propeller can be rotated in a region in which the pitch angle is small.

### Supplementary Note 7

In the blade pitch angle changing mechanism according to Supplementary Note 6, the pitch angle may increase as a separation distance in the axial direction between the head pressing portion and the rotational stopper increases in a state where the head pressing portion is in contact with the crosshead. According to such a configuration, the pitch angle of the blade can be reduced in a state where the head pressing portion and the rotational stopper are engaged with each other and the rotation of the rotor is prevented. This reduces the flight resistance when the rotation of the propeller is stopped.

### Supplementary Note 8

In the blade pitch angle changing mechanism according to Supplementary Note 7, the pitch angle may be set in a manner so that the blade lies along the plane of rotation of the propeller in a state where the head pressing portion is engaged with the rotational stopper. According to such a configuration, the flight resistance when the rotation of the propeller is stopped can be effectively reduced.

### Supplementary Note 9

In the blade pitch angle changing mechanism according to Supplementary Note 6, the control rod may be a non-rotating member configured not to rotate with respect to the airframe of the flying object.

### Supplementary Note 10

The blade pitch angle changing mechanism according to any one of Supplementary Notes 7 to 9 may further include the fixed stopper (74) fixed to a non-rotating portion, wherein the head pressing portion may engage with the rotational stopper and the fixed stopper when the head pressing portion moves in accordance with the movement of the control rod. According to such a configuration, it is possible to prevent the rotational torque from the rotational stopper from being transmitted to the control rod.

### Supplementary Note 11

In the blade pitch angle changing mechanism according to any one of Supplementary Notes 7 to 10, the propeller may be provided in the VTOL rotor (20) configured to generate lift, and by engagement with the rotational stopper, the propeller may be fixed at a position within a range of plus 5 degrees to minus 5 degrees from the rotational position at which resistance to the flight wind from ahead of the flying object is minimized. According to such a configuration, the flight resistance during cruise flight can be reduced.

### Supplementary Note 12

In the blade pitch angle changing mechanism according to Supplementary Note 11, the propeller may include a plurality of the blades (34), and by engagement with the rotational stopper, the propeller may be fixed in a manner so that one of the plurality of blades is located at a position that is within a range of plus 5 degrees to minus 5 degrees from the rotational position parallel to the front-rear direction of the airframe of the flying object and that is on the front side of the airframe with respect to the rotational axis (A1) of the propeller. According to such a configuration, the flight resistance during cruise flight can be effectively reduced.

## Claims

1. A blade pitch angle changing mechanism (30) comprising:
a control rod (56) movable in an axial direction of a rotating body (41) configured to rotate a propeller (24) provided in a flying object (10); and
a crosshead (58) configured to change a pitch angle of a blade (34) provided in the propeller by moving in the axial direction in accordance with movement of the control rod,
wherein a pitch angle invariant section (MR1) in which the pitch angle is not changed is set in a part of a movable range (MR) of the control rod.

2. The blade pitch angle changing mechanism according to claim 1, further comprising a head pressing portion (70) configured to move in the axial direction integrally with the control rod and to press the crosshead, wherein
the crosshead is movable relative to the control rod in the axial direction, and
the head pressing portion moves the crosshead in the axial direction to thereby change the pitch angle.

3. The blade pitch angle changing mechanism according to claim 2, wherein
one end of the movable range of the control rod is a starting position (P0) at which a moving distance of the control rod is zero, and another end of the movable range of the control rod is a maximum displacement position at which the moving distance of the control rod is maximum, and
the blade pitch angle changing mechanism further comprises a head support portion (80) configured to support the crosshead in a manner so that the head pressing portion is separated from the crosshead when the moving distance of the control rod from the starting position is less than a first threshold distance.

4. The blade pitch angle changing mechanism according to claim 3, further comprising a biasing member (57) configured to bias the crosshead toward the head support portion.

5. The blade pitch angle changing mechanism according to claim 4, wherein
the biasing member is disposed between the control rod and the crosshead.

6. The blade pitch angle changing mechanism according to claim 3, wherein
the rotating body is provided with a rotational stopper (72) engageable with the head pressing portion,
in a case where the moving distance of the control rod from the starting position is less than a second threshold distance that is smaller than the first threshold distance, the head pressing portion engages with the rotational stopper to thereby prevent the propeller from rotating, and
the pitch angle invariant section is a region of the movable range of the control rod where the moving distance is less than the first threshold distance.

7. The blade pitch angle changing mechanism according to claim 6, wherein
the pitch angle increases as a separation distance in the axial direction between the head pressing portion and the rotational stopper increases in a state where the head pressing portion is in contact with the crosshead.

8. The blade pitch angle changing mechanism according to claim 7, wherein
the pitch angle is set in a manner so that the blade lies along a plane of rotation of the propeller in a state where the head pressing portion is engaged with the rotational stopper.

9. The blade pitch angle changing mechanism according to claim 6, wherein
the control rod is a non-rotating member configured not to rotate with respect to an airframe of the flying object.

10. The blade pitch angle changing mechanism according to any one of claims 7 to 9, further comprising a fixed stopper (74) that is fixed to a non-rotating portion, wherein
the head pressing portion engages with the rotational stopper and the fixed stopper when the head pressing portion moves in accordance with the movement of the control rod.

11. The blade pitch angle changing mechanism according to any one of claims 7 to 10, wherein
the propeller is provided in a vertical takeoff and landing rotor (20) configured to generate lift, and
by engagement with the rotational stopper, the propeller is fixed at a position within a range of plus 5 degrees to minus 5 degrees from a rotational position at which resistance to a flight wind from ahead of the flying object is minimized.

12. The blade pitch angle changing mechanism according to claim 11, wherein
the propeller includes a plurality of the blades, and
by the engagement with the rotational stopper, the propeller is fixed in a manner so that one of the plurality of blades is located at a position that is within a range of plus 5 degrees to minus 5 degrees from a rotational position parallel to a front-rear direction of an airframe of the flying object and that is on a front side of the airframe with respect to a rotational axis (A1) of the propeller.
